# EUROPÄISCHE PATENTSCHRIFT

(11) **EP 0 850 164 B1**
(45) Veröffentlichungstag und Bekanntmachung des Hinweises auf die Patenterteilung: **20.02.2002**
(21) Anmeldenummer: 96924864.0
(22) Anmeldetag: 03.07.1996
(51) Int. Cl.: B60T 8/00

(54) **VERBESSERUNG DES REGELVERHALTENS EINER BLOCKIERGESCHÜTZTEN BREMSANLAGE**
IMPROVEMENT IN THE CONTROL BEHAVIOUR OF AN ANTI-LOCKING BRAKE SYSTEM
AMELIORATION DU COMPORTEMENT DE REGULATION D'UN SYSTEME DE FREINAGE AVEC DISPOSITIF ANTI-BLOCAGE

(30) Priorität: 28.09.1995 DE 19536058
(43) Veröffentlichungstag der Anmeldung: 01.07.1998
(73) Patentinhaber: Continental Teves AG & Co. oHG, 60488 Frankfurt (DE)
(72) Erfinder: BATISTIC, Ivica, D-60385 Frankfurt am Main (DE)
(86) Internationale Anmeldenummer: EP9602911
(87) Internationale Veröffentlichungsnummer: WO9711868

(56) Entgegenhaltungen:
- EP-A- 0 276 798
- EP-A- 0 299 510
- DE-A- 4 241 844
- US-A- 4 323 969
- US-A- 4 989 923

## Beschreibung

Die Erfindung bezieht sich auf ein Verfahren zur Verbesserung des Regelverhaltens einer Bremsanlage mit Blockierschutzregelung, bei dem das Drehverhalten der Räder gemessen wird und bei dem durch Auswertung sowie logische Verknüpfung der Raddrehzahlinformationen eine Fahrzeugreferenzgeschwindigkeit, Radschlupf- und Radbeschleunigungsinformationen sowie andere Regelgrößen gewonnen werden, die zur Bemessung und Modulation des Bremsdruckes dienen.

Blockiergeschützte Bremsanlagen (ABS) mit elektronischer Regelung haben in den letzten Jahren große Bedeutung gewonnen. Solche Systeme sind in großer Stückzahl und vielfältiger Ausführung auf dem Markt. Bei der überwiegenden Zahl der bekannten Systeme werden die für die Blockierschutzregelung benötigten Informationen durch Messen des Drehverhaltens der Fahrzeugräder gewonnen. Durch logisches Verknüpfen der von den einzelnen Rädern stammenden Signale wird dabei eine Fahrzeugreferenzgeschwindigkeit ermittelt, die als Bezugsgröße zur Errechnung des Radschlupfes und anderer Regelgrößen und schließlich zur Festlegung und Modulation des Bremsdruckes in den Radbremsen der einzelnen Fahrzeugräder herangezogen werden kann. Ein derartiges System ist aus EP-A-0.299.510 bekannt.

Das Identifizieren der tatsächlichen Regelungssituation anhand der Informationen, die die Radsensoren liefern, und das Einstellen bzw. Modulieren des Bremsdruckes im Hinblick auf ein optimales Bremsverhalten bereitet Schwierigkeiten, wenn die Interpretation der Sensorsignale keine eindeutige Aussage auf die momentane Fahr- und Regelsituation zuläßt. Außerdem müssen bei der Druckmodulation, die der ABS-Regler auf Basis der sog. Regelphilosophie, also der vorgegebenen Algorithmen, in Abhängigkeit von dem Drehverhalten der einzelnen Räder bewirkt, an sich widersprüchliche Forderungen nach Radstabilität - durch Druckentlastung - und nach kurzem Bremsweg - durch möglichst hohen Bremsdruck - erfüllt werden.

Es gibt eine Reihe von Situationen, die von dem ABS-Regler besonders schwierig zu erkennen sind und die ohne besondere Maßnähmen zu Fehlinterpretationen führen. Beispielsweise werden durch Schlaglöcher und andere Fahrbahnstörungen Radverzögerungen ausgelöst, die der Regler fälschlicherweise als Blockiertendenz interpretiert. Es ist daher sinnvoll, das Drehverhalten der Räder nach Kriterien unterschiedlicher Art zu analysieren, um Widersprüche zu entdecken und einzelne Regelungsmaßnahmen, besonders die sicherheitskritischen, nach unterschiedlichen Gesichtspunkten und Kriterien absichern zu können.

Der Erfindung liegt nun die Aufgabe zugrunde, Regelungssituationen zu erkennen, in denen der durch die Regelung eingestellte Bremsdruck zu gering ist bzw. unter dem an sich erreichbaren Optimum liegt.

Es hat sich nun herausgestellt, daß sich diese Aufgabe durch das in Anspruch 1 beschriebene Verfahren lösen läßt, dessen Besonderheit darin besteht, daß während eines Bremsvorganges ständig die niedrigste Radgeschwindigkeit mit der höchsten Radgeschwindigkeit verglichen wird, daß bei einer zumindest näherungsweisen Übereinstimmung zwischen der niedrigsten und der höchsten Radgeschwindigkeit und beim Andauern dieser Übereinstimmung über eine vorgegebene Zeitspanne hinaus nach Ablauf dieser Zeitspanne ein Druckaufbau in den Radbremsen der Vorderräder zugelassen oder - direkt oder indirekt - herbeigeführt wird. Beispielsweise wird der Bremsdruck in den Vorderrädern durch Öffnen der Einlaßventile, die im Druckmittelweg von dem Hauptzylinder der Bremsanlage zu den Vorderradbremsen liegen, erhöht. Durch Anheben der Referenzgeschwindigkeit, die als Referenzgröße für die Bremsdruckbemessung dient, kann auf indirektem Wege das gleiche erreicht werden.

Nach einem vorteilhaften Ausführungsbeispiel der Erfindung wird die vorgegebene Zeitspanne in Abhängigkeit von der Beschleunigung (bzw. Verzögerung) der nicht angetriebenen Fahrzeugräder variiert, wobei die vorgegebene Zeitspanne, solange die Beschleunigung aller nicht angetriebenen Räder größer ist als ein vorgegebener Grenzwert, auf einen kleineren Wert, bei einer geringeren Beschleunigung (bzw. höheren Verzögerung) auf eine längere Zeitdauer eingestellt wird. Anstelle dieses zweistufigen Verfahrens können auch noch mehrere Stufen vorgesehen werden, wobei mit abnehmender Beschleunigung die Dauer der vorgegebenen Zeitspannen anwächst.

Die Erfindung geht von der Überlegung aus, daß während eines geregelten Bremsvorganges eine andauernde Stabilität aller Räder, d. h. eine weitgehende Übereinstimmung der Radgeschwindigkeiten der Räder, ungewöhnlich ist und als Indiz für zu geringen, unter dem Optimum liegendem Bremsdruck bewertet werden kann. Bei einer Regelung des Bremsdruckes nahe der Blockierschwelle steigt erfahrungsgemäß der Bremsschlupf einzelner Räder soweit an, daß der Geschwindigkeitsverlauf dieses Rades von dem schnellsten Rad relativ stark abweicht. Durch ständigen Vergleich der niedrigsten mit der höchsten Radgeschwindigkeit läßt sich dies erkennen. Bleibt ein solches Abweichen aus bzw. dauert die Übereinstimmung über eine vorgegebene Zeitspanne hinaus an, ist dies ein Indiz für ungenügenden Bremsdruck. Zur Verbesserung der Regelung wird in dieser Situation der Vorderradbremsdruck direkt oder indirekt erhöht.

In den Unteransprüchen sind noch weitere vorteilhafte Ausführungsbeispiele des erfindungsgemäßen Verfahrens genannt. Beispielsweise können Zähler verwendet werden, deren Zählraten die Zeitspannen vorgeben, bei deren Überschreiten die Bremsdrückerhöhung eingeleitet wird. Diese Zähler werden jeweils zurückgestellt, wenn die Differenz zwischen der niedrigsten Radgeschwindigkeit und der höchsten einen vorgegebenen Grenzwert von beispielsweise 95 - 98 % oder 96 - 97 % der höchsten Radgeschwindigkeit überschreitet.

Weitere Merkmale, Vorteile und Anwendungsmöglichkeiten der Erfindung gehen aus der folgenden Schilderung weiterer Details anhand der beigefügten Abbildungen hervor.

Es zeigen
- Fig. 1: in vereinfachter Darstellung die wesentlichen Komponenten einer Schaltungsanordnung zur Durchführung des erfindungsgemäßen Verfahrens,
- Fig. 2: in Flow-Chart die einzelnen Schritte bei Durchführung des Verfahrens nach der Erfindung und
- Fig. 3: Diagramme zur Erläuterung der Wirkungsweise einer Schaltungsanordnung nach der Erfindung.

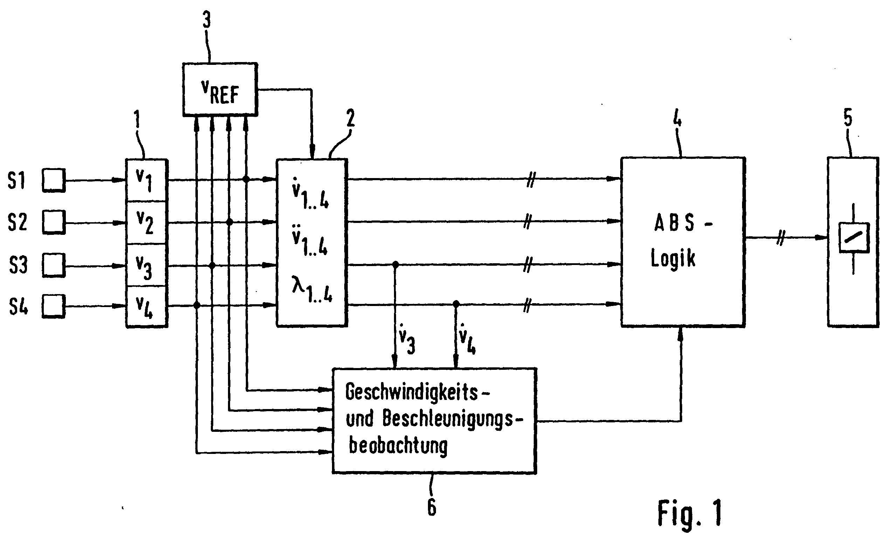

Fig. 1 zeigt eine Schaltungsanordnung für ein elektronisch geregeltes Antiblockiersystem. Mit Hilfe von Radsensoren S1 bis S4 werden die Eingangsinformationen des Systems gewonnen. In einer Aufbereitungsschaltung 1 werden auf Basis dieser Sensorinformationen Radgeschwindigkeitssignale v₁ bis v₄ ermittelt, die am Ausgang dieser Schaltung 1 entweder als Signale, oder, wenn es sich um ein Datenverarbeitungssystem handelt, in Form von Geschwindigkeitsdaten zur Verfügung stehen.

In einer Signalverarbeitungsschaltung 2 werden in bekannter Weise die zeitlichen Ableitungen der Geschwindigkeitssignale v₁ - v₄, nämlich vor allem die Beschleunigungssignale v̇₁ bis v̇₄, die Rucksignale v₁ bis v, und die Schlupfsignale λ₁ bis λ₄ gebildet. Zur Ermittlung des Radschlupfes λ₁ bis λ₄ wird eine Fahrzeugreferenzgeschwindigkeit v_{REF} benötigt, die annähernd die Fahrzeuggeschwindigkeit wiedergibt.

Die durch die Auswertung der Sensorsignale gewonnenen Informationen werden zu einer ABS-Logik 4 weitergeleitet, in der durch umfangreiche Berechnungen auf Basis komplexer Algorithmen Bremsdrucksteuersignale gewonnen werden, mit denen elektrisch betätigbare Hydraulikventile oder andere Aktuatoren, mit denen sich der Bremsdruck in einer hydraulischen Bremsanlage oder die Bremskraft einstellen und modulieren lassen. In Fig. 1 ist der Ventilblock einer hydraulischen Bremsanlage symbolisch mit 5 beziffert.

Die ABS-Logik 4 wird häufig durch programmgesteuerte Schaltungen, nämlich durch einen oder durch mehrere Mikrocomputer realisiert.

Die wesentlichen Schaltkreise oder Programmteile, die zur Durchführung des erfindungsgemäßen Verfahrens benötigt werden, sind in einer Geschwindigkeits- und Beschleunigungsbeobachtung 6 untergebracht. Diesem Schaltblock werden als Eingangssignale die Radgeschwindigkeiten v₁ bis v₄ und die Beschleunigungssignale v̇₁,v̇₄ zugeleitet, wobei die Indices 3 und 4 auf die nichtangetriebenen Räder hinweisen.

In dem Schaltblock 6 wird ständig die niedrigste Radgeschwindigkeit vₘᵢₙ mit der höchsten Radgeschwindigkeit vₘₐₓ verglichen. Die Besonderheiten des erfindungsgemäßen Verfahrens gelangen zur Geltung, wenn während eines geregelten Bremsvorganges die Radgeschwindigkeiten v₁ bis v₄ für vorgegebene Zeitspannen, die in der Größenordnung von einigen 100 ms liegen, dicht beieinanderliegen bzw. sich praktisch kaum unterscheiden. Ist für die Dauer dieser vorgegebenen Zeitspannen die geringste Radgeschwindigkeit vₘᵢₙ größer als ein vorgegebener Wert k x vₘₐₓ, wobei 'k' beispielsweise zwischen 96 und 97% liegt, ist dies ein Hinweis darauf, daß der eingesteuerte Bremsdruck unter dem optimalen Wert liegen könnte.

Wenn die geringste Radgeschwindigkeit vₘᵢₙ über eine bestimmte Zeitspanne hinaus nahezu mit der höchsten Radgeschwindigkeit vₘₐₓ übereinstimmt, wird dies durch den Schaltblock 6 der ABS-Logik 4 signalisiert und dadurch eine Druckerhöhung in den Vorderradbremsen herbeigeführt. Die Beobachtungszeit bzw. die Zeitspanne bis zur Reaktion auf die näherungsweise Übereinstimmung aller Radgeschwindigkeiten ist von der Beschleunigung (eine negative Beschleunigung wird auch "Verzögerung" genannt) der nicht angetriebenen Räder während des Bremsvorgangs abhängig. Bei einer mäßigen Abbremsung mit einer Radbeschleunigung über etwa -0,5 g bis -0,7 g (bzw. Verzögerung von 0,5 g bis 0,7 g) wird bereits nach einer relativ kurzen Zeitspanne von z. B. 250 ms eine Druckanhebung in den Vorderradbremsen herbeigeführt, während bei einer stärkeren Abbremsung über -0,7g bis -1g eine längere Zeitspanne von z. B. 400 ms vergehen muß, bevor der Schaltblock 6 über die ABS-Logik 4 eine Bremsdruckerhöhung in den Vorderradbremsen veranlaßt.

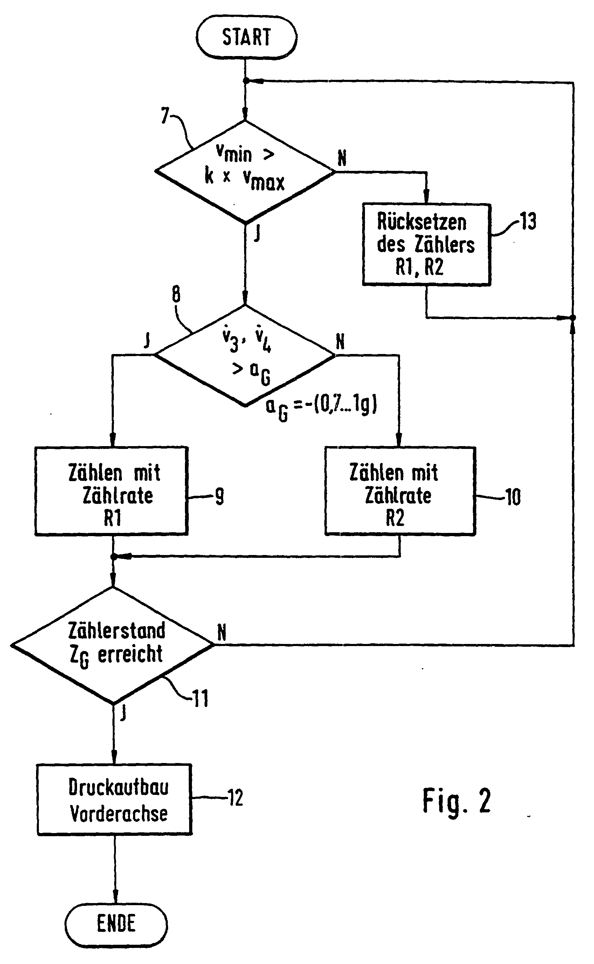

Die Funktion und Wirkungsweise der Geschwindigkeits- und Beschleunigungsbeobachtung 6 wird durch das Flow-Chart nach Fig. 2 veranschaulicht.

Nach dem START des Unterprogramms nach Fig. 2 wird zunächst in der Verzweigung 7 festgestellt, ob
vₘᵢₙ > k x vₘₐₓ, mit k = 0,96 bis 0,97,
erfüllt ist. Ist dies der Fall, liegen also alle Radgeschwindigkeiten sehr dicht zusammen, wird ein der vorgegebenen Zeitspanne entsprechender Zählvorgang mit einer Zählrate R1 oder R2 in Lauf gesetzt. Sobald ein Zählerstand Z_{G} erreicht ist (Verzweigung 11), wird im Schritt 12 der Bremsdruck in den Vorderradbremsen erhöht; dies wird entweder durch direktes Ansteuern und Öffnen von Einlaßventilen, die üblicherweise in den zu den Vorderradbremsen liegenden Druckmittelwegen liegen, oder durch Anheben der Fahrzeugreferenzgeschwindigkeit herbeigeführt.

Die Zeitspanne bis zum Einsetzen der Bremsdruckeinsteuerung wird durch Vorgabe der Zählrate R1 (Programmteil 9) oder der Zählrate R2 (Programmteil 10) vorgegeben, und zwar in Abhängigkeit von der in der Verzweigung 8 erfragten Höhe, mit der die nicht angetriebenen Räder (Räder 3,4) beschleunigt bzw. verzögert werden. Bei mäßiger, über einem Beschleunigungsgrenzwert liegender Beschleunigung, also
v_{3,4} > a_{G}
gilt die Zählrate R1, bei geringerer Beschleunigung (bzw. höherer Verzögerung) gilt die Zählrate R2. Bei einem Ausführungsbeispiel der Erfindung galt
a_{G} = -(0,7g bis 1g)

Aus dem Flow-Chart 2 ist außerdem zu ersehen, daß der Zähler R1,R2 im Schritt 13 zurückgesetzt wird, wenn die Bedingung
vₘᵢₙ > k x vₘₐₓ
nicht erfüllt ist oder wenn der Zählerstand Z_{G} im Schritt 11nicht erreicht wird.

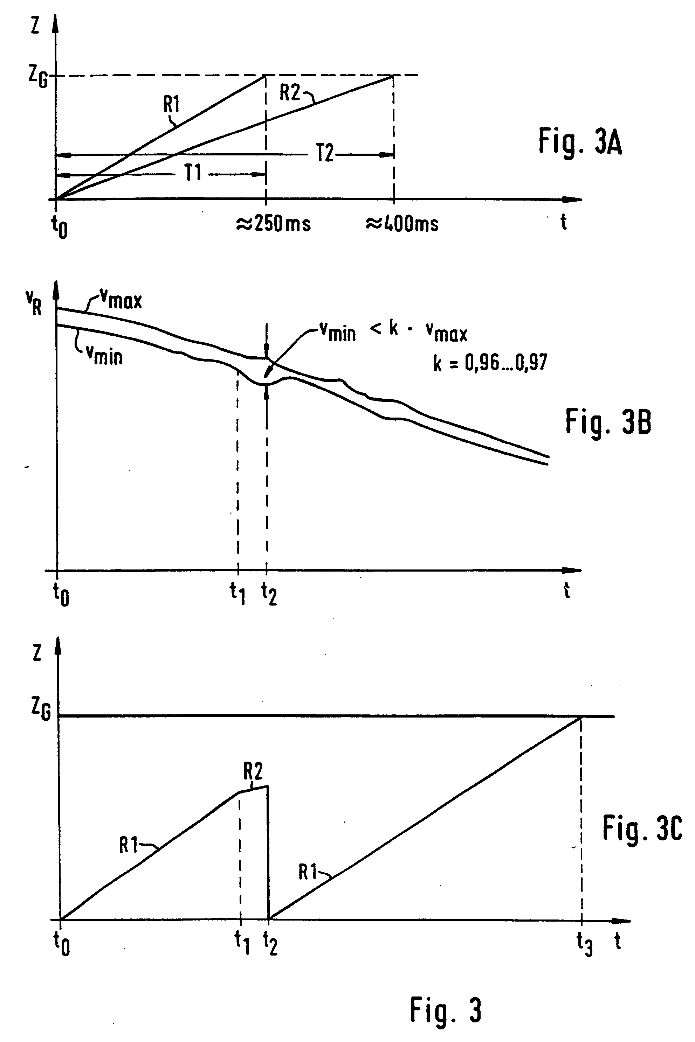

Die Diagramme in Fig. 3 dienen zur Erläuterung der beschriebenen Bedingungen und des Ablaufs des erfindungsgemäßen Verfahrens. Fig. 3A veranschaulicht die Funktion der Zähler mit den Zählraten R1 und R2, mit denen die vorgegebenen Zeitspannen T1,T2 realisiert werden. Der Zähl-Grenzwert Z_{G} wird mit der Zählrate R1 nach 250 ms, mit der Zählrate R2 erst nach 400 ms erreicht. Dies ist lediglich ein Ausführungsbeispiel.

Nach Fig. 3B weichen die maximale und minimale Radgeschwindigkeit vₘₐₓ und vₘᵢₙ über einen längeren Zeitraum nur relativ gering voneinander ab. Zum Zeitpunkt t₀, siehe auch Fig. 3C, wird der Zähler mit der Zählrate R1 in Lauf gesetzt. Zum Zeitpunkt t₁ hat die Beschleunigungsänderung bzw. die höhere Verzögerung des vₘᵢₙ-Rades einen Übergang zur Zählrate R2 zur Folge. Zum Zeitpunkt t₂ wird
vₘᵢₙ < k x vₘₐₓ
k = 0,96 ... 0,97

Folglich wird zum Zeitpunkt t₂ der Zähler, weil die Antwort auf die Abfrage 7 (Fig. 2) "nein" lautet, über den Operator 13 zurückgesetzt. Zum Zeitpunkt t₂ wird das Zählen der Zählrate R1 erneut gestartet. Zum Zeitpunkt t₃ wird der Zählerendstand Z_{G} erreicht und dadurch eine Druckerhöhung in den Vorderradbremsen veranlaßt. Das Sonderprogramm ist damit beendet. Der dargestellte Programmablauf beginnt von neuem.

Erfindungsgemäß wird also auf sehr einfache Weise eine Verbesserung der Bremswirkung erreicht, indem in einem Übergangszustand, in dem bei mäßiger Bremswirkung alle Räder nahezu mit gleicher Geschwindigkeit rotieren, zusätzlicher Bremsdruck eingesteuert wird.

## Patentansprüche

1. Verfahren zur Verbesserung des Regelverhaltens einer Bremsanlage mit Blockierschutzregelung, bei dem das Drehverhalten der Räder gemessen wird und bei dem durch Auswertung und logische Verknüpfung der Raddrehzahlinformationen eine Fahrzeugreferenzgeschwindigkeit, Radschlupf- und Radbeschleunigungsinformationen sowie andere Regelgrößen gewonnen werden, die zur Bemessung und Modulation des Bremsdruckes dienen, **dadurch gekennzeichnet, daß** während eines Bremsvorganges ständig die niedrigste Radgeschwindigkeit (vₘᵢₙ) mit der höchsten Radgeschwindigkeit (vₘₐₓ) verglichen wird, daß bei einer zumindest näherungsweisen Übereinstimmung zwischen der niedrigsten (vₘᵢₙ) and der höchsten (vₘₐₓ) Radgeschwindigkeit und beim Andauern dieser Übereinstimmung über eine vorgegebene Zeitspanne (T1,T2) hinaus nach Ablauf dieser Zeitspanne (T1,T2) ein Druckaufbau in den Radbremsen der Vorderräder zugelassen oder herbeigeführt wird.

2. Verfahren nach Anspruch 1, **dadurch gekennzeichnet, daß** der Druckaufbau in den Vorderradbremsen durch Öffnen der Einlaßventile, die im Druckmittelweg von dem Hauptzylinder der Bremsanlage zu den Radbremsen der Räder liegen, herbeigeführt wird.

3. Verfahren nach Anspruch 1, **dadurch gekennzeichnet, daß** der Druckaufbau durch Erhöhen der Fahrzeugreferenzgeschwindigkeit (V_{REF}) herbeigeführt wird.

4. Verfahren nach einem oder mehreren der Ansprüche 1 bis 3, **dadurch gekennzeichnet, daß** die vorgegebene Zeitspanne (T1,T2) in Abhängigkeit von der Beschleunigung (v̇₃, v̇₄) der nicht angetriebenen Räder variiert wird, wobei die vorgegebene Zeitspanne, solange die Beschleunigung aller nicht angetriebenen Räder größer ist als ein vorgegebener Grenzwert (a_{G}), der in der Größenordnung von - 0,5 g bis -1 g liegt, auf einen kleineren Wert (T1), bei einer geringeren Beschleunigung (bzw. höheren Verzögerung) auf eine längere Zeitdauer (T2) eingestellt wird.

5. Verfahren nach Anspruch 4, **dadurch gekennzeichnet, daß** die vorgegebene Zeitspanne (T1,T2) in mehreren Stufen variiert wird, wobei mit abnehmender Beschleunigung (höherer Verzögerung) die vorgegebenen Zeitspannen verlängert werden.

6. Verfahren nach einem oder mehreren der Ansprüche 1 bis 5, **dadurch gekennzeichnet, daß** Zähler verwendet werden, deren Zählraten (R1, R2) die Zeitspannen (T1,T2) vorgeben, wobei bei höheren, über dem Grenzwert (a_{G}) liegenden Radbeschleunigungen eine Zählrate in der Größenordnung zwischen 100 ms und 300 ms, bei niedrigeren Beschleunigungen (d. h. höheren Verzögerungen) eine Zählrate in der Größenordnung zwischen 300 ms und 500 ms vorgegeben werden.

7. Verfahren nach einem oder mehreren Ansprüche 1 - 6, **dadurch gekennzeichnet, daß** ein Grenzwert (k x vₘₐₓ) für die niedrigste Radgeschwindigkeit (vₘᵢₙ) von 95 - 98 %, vorzugsweise von 96 - 97 % der höchsten Radgeschwindigkeit (vₘₐₓ) vorgegeben wird und daß eine über diesen Grenzwert hinausgehende Annäherung der niedrigsten an die höchste Radgeschwindigkeit als (näherungsweise) Übereinstimmung gewertet wird.

8. Verfahren nach Anspruch 7, **dadurch gekennzeichnet, daß** die Zähler (R1,R2) zurückgestellt werden, sobald die niedrigste Radgeschwindigkeit (vₘᵢₙ) den vorgegebenen Grenzwert (k x vₘₐₓ) überschreitet.

## Claims

1. Method of improving the control behavior of a brake system with anti-lock control, wherein the rotational behavior of the wheels is measured and evaluation and logical combining of the wheel rotational speed data permits producing a vehicle reference speed, wheel slip data and wheel acceleration data and other control parameters which are used to proportion and modulate the braking pressure,
**characterized in that** the lowest wheel speed (vₘᵢₙ) is continuously compared with the highest wheel speed (vₘₐₓ) during a braking operation, **in that** in the event of a correlation, at least by approximation, between the lowest (vₘᵢₙ) and the highest (vₘₐₓ) wheel speed and if the correlation lasts longer than a predefined length of time (T1, T2), the pressure in the wheel brakes of the front wheels is permitted to increase or caused to increase after this length of time (T1, T2).

2. Method as claimed in claim 1,
**characterized in that** the pressure in the front-wheel brakes is increased by opening the inlet valves which are inserted in the pressure fluid path from the master cylinder of the brake system to the brakes of the wheels.

3. Method as claimed in claim 1,
**characterized in that** the pressure is increased by rise of the vehicle reference speed (v_{REF}).

4. Method as claimed in any one or more of claims 1 to 3,
**characterized in that** the predefined length of time (T1, T2) is varied as a function of the acceleration (ν̇₃, ν̇₄) of the non-driven wheels, and the predefined length of time is set to a small value (T1) as long as the acceleration of all non-driven wheels is in excess of a predetermined limit value (a_{G}) which is in the order of 0.5 g to -1 g, and is set to a longer duration (T2) when the acceleration is lower (or the deceleration is greater).

5. Method as claimed in claim 4,
**characterized in that** the predefined length of time (T1, T2) is varied in several steps, and the duration of the predefined lengths of time rises with decreasing acceleration (greater deceleration).

6. Method as claimed in any one or more of claims 1 to 5,
**characterized in that** counters are used having count rates (R1, R2) which predefine the lengths of time (T1, T2), and a count rate in the order between 100 msec and 300 msec is preset at high wheel accelerations in excess of the limit value (a_{G}), and a count rate in the order between 300 msec and 500 msec is preset at lower accelerations (i.e., greater decelerations).

7. Method as claimed in any one or more of claims 1 to 6,
**characterized in that** a limit value (k x vₘₐₓ) for the lowest wheel speed (vₘᵢₙ) of 95 to 98 % is preset, preferably, of 96 to 97 % of the highest wheel speed (vₘₐₓ), and **in that** an approximation (in excess of this limit value) of the lowest wheel speed to the highest wheel speed is assessed as (approximate) correlation.

8. Method as claimed in claim 7,
**characterized in that** the counters (R1, R2) are reset as soon as the lowest wheel speed (vₘᵢₙ) exceeds the predetermined limit value (k x vₘₐₓ).

## Revendications

1. Procédé d'amélioration du comportement de régulation d'un système de freinage à régulation antiblocage des roues, où le comportement de rotation des roues est mesuré, et où, grâce à une analyse et un chaînage logique des informations de régime de rotation des roues, on obtient une vitesse de référence du véhicule, des informations de glissement et des informations d'accélération des roues, ainsi que d'autres grandeurs de régulation qui servent au dosage et à la modulation de la pression de freinage,
**caractérisé en ce que**, pendant une opération de freinage, on compare en permanence la vitesse de roue la plus basse (vₘᵢₙ) et la vitesse de roue la plus élevée (vₘₐₓ), **en ce que**, si la vitesse de roue la plus basse (vₘᵢₙ) et la vitesse de roue la plus haute (vₘₐₓ) coïncident au moins à peu près, et si cette coïncidence persiste au-delà d'une période prédéterminée (T1, T2), une augmentation de la pression des freins de roues des roues avant est autorisée ou provoquée après écoulement de cette période (T1, T2).

2. Procédé selon la revendication 1, **caractérisé en ce que** l'augmentation de la pression des freins de roues avant est effectuée par l'ouverture des vannes d'admission qui se situent dans le passage de fluide de pression entre le maître-cylindre du système de freinage et les freins de roues.

3. Procédé selon la revendication 1, **caractérisé en ce que** l'augmentation de la pression est effectuée par une hausse de la vitesse de référence (v_{REF}) du véhicule.

4. Procédé selon l'une ou plusieurs des revendications 1 à 3, **caractérisé en ce que** la période prédéterminée (T1, T2) varie en fonction de l'accélération (ν̇₃, ν̇₄) des roues non motrices, la période prédéterminée étant réglée, tant que l'accélération de toutes les roues non motrices est supérieure à une valeur limite prédéterminée (a_{G}), qui est de l'ordre de -0,5 g à -1,0 g, à une valeur plus petite (T1), et pour une accélération moindre (ou décélération plus forte), à une période plus longue (T2).

5. Procédé selon la revendication 4, **caractérisé en ce que** la période prédéterminée (T1, T2) est modifiée en plusieurs étapes, où les périodes prédéterminées sont prolongées si l'accélération diminue (la décélération augmente).

6. Procédé selon l'une ou plusieurs des revendications 1 à 5, **caractérisé en ce que** l'on utilise des compteurs dont les taux de comptage (R1, R2) déterminent les périodes (T1, T2), et où, si les accélérations des roues sont plus élevées et supérieures à la valeur limite (a_{G}), l'on définit un taux de comptage compris entre environ 100 ms et 300 ms, et pour des accélérations plus faibles (c'est-à-dire, dès décélérations plus fortes), un taux de comptage compris entre environ 300 et 500 ms.

7. Procédé selon l'une ou plusieurs des revendications 1 à 6, **caractérisé en ce qu'**une valeur limite (k x vₘₐₓ) de la vitesse de roue la plus basse (vₘᵢₙ) est prédéfinie entre 95 et 98 %, de préférence entre 96 et 97 % de la vitesse de roue la plus élevée (vₘₐₓ), et **en ce qu'**un rapprochement entre la vitesse de roue la plus basse et la vitesse de roue la plus élevée, dépassant cette valeur limite, est considéré comme une coïncidence (approximative) de celles-ci.

8. Procédé selon la revendication 7, **caractérisé en ce que** les compteurs (R1, R2) sont remis à zéro dès que la vitesse de roue la plus basse (vₘᵢₙ) dépasse la valeur limite prédéterminée (k x vₘₐₓ).
